(19) Europäisches Patentamt
European Patent Office
Office européen des brevets

(11) **EP 2 184 621 A1**

(12) **EUROPEAN PATENT APPLICATION**

(43) Date of publication:
**12.05.2010 Bulletin 2010/19**

(51) Int Cl.:
***G01V 1/30*** *(2006.01)*     ***G01V 1/36*** *(2006.01)*
***G01V 1/38*** *(2006.01)*

(21) Application number: **09173513.4**

(22) Date of filing: **20.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventors:<br>• **Day, Anthony James**<br>  **3023, Drammen (NO)**<br>• **Cambois, Guillaume**<br>  **018987, Singapore (SG)** |
| (30) Priority: **20.10.2008 US 288377** | (74) Representative: **Lord, Michael**<br>**Gill Jennings & Every LLP**<br>**Broadgate House**<br>**7 Eldon Street**<br>**London EC2M 7LH (GB)** |
| (71) Applicant: **PGS Geophysical AS**<br>**1366 Lysaker (NO)** | |

(54) **Method for determining formation quality factor from dual-sensor marine seismic signals**

(57)     A method for estimating formation quality factor includes determining an upgoing pressure wavefield of seismic signals recorded using a collocated pressure responsive sensor and motion responsive sensor deployed in a body of water The upgoing wavefield has spectral effect of water surface ghosting attenuated by combining the pressure responsive signals and motion responsive signals. The quality factor is determined by determining a difference in amplitude spectra between a first seismic event and a second seismic event in the upgoing pressure wavefield.

FIG. 2

**EP 2 184 621 A1**

## Description

Field of the Invention

The invention relates generally to the field of marine seismic data acquisition and processing. More particularly, the invention relates to methods for processing marine seismic signals to determine certain characteristics of subsurface rock formations.

Background Art

Seismic surveying is known in the art for determining structures and acoustic properties of rock formations below the earth's surface. Seismic surveying generally includes deploying an array of seismic sensors at the surface of the earth in a selected pattern, and selectively actuating a seismic energy source positioned near the seismic sensors. The energy source may be an explosive, a vibrator, or in the case of seismic surveying performed in a body of water such as a lake or the ocean, one or more air guns or water guns.

Seismic energy which emanates from the source travels through the subsurface rock formations until it reaches an acoustic impedance boundary in the formations. Acoustic impedance boundaries typically occur where the composition and/or mechanical properties of the earth formation change. Such boundaries are typically referred to as "bed boundaries." At a bed boundary, some of the seismic energy is reflected back toward the earth's surface. The reflected energy may be detected by one or more of the seismic sensors deployed on the surface. Seismic signal processing known in the art has as one of a number of objectives the determination of the depths and geographic locations of bed boundaries below the earth's surface. The depth and location of the bed boundaries is inferred from the travel time of the seismic energy to the bed boundaries and back to the sensors at the surface.

Seismic surveying is performed in the ocean and other bodies of water ("marine seismic surveying") to determine the structure and acoustic properties of rock formations below the water bottom. Marine seismic surveying systems known in the art include a vessel which tows one or more seismic energy sources, and the same or a different vessel which tows one or more "streamers." A streamer is an array of seismic sensors in a cable that is towed by the vessel. Typically, a seismic vessel will tow a plurality of such streamers arranged to be separated by a selected lateral distance from each other, in a pattern selected to enable relatively complete determination of geologic structures in three dimensions. Typically, the sensors in the streamers are pressure responsive sensors such as hydrophones. More recently, streamers have been devised which include both pressure responsive sensors and particle motion responsive sensors. In some of the foregoing streamers, the pressure responsive sensors and motion responsive sensors are substantially collocated. One type of such streamer, referred to as a "dual sensor" streamer is described in U.S. Patent No. 7,239,577 issued to Tenghamn et al. and assigned to an affiliate of the assignee of the present invention.

One characteristic of subsurface formations of interest is the so called "quality factor." The quality factor is a measure of frequency dependent attenuation of seismic energy, that is, a measure of the relationship between seismic energy frequency and the attenuation rate of particular formations. Quality factor has been used as a direct indicator of the presence of hydrocarbons, among other uses. Estimation of attenuation of seismic waves can be as important as the estimation of interval velocities in the field of seismic data interpretation. Estimates of attenuation of seismic waves provide an additional perspective of the lithology (rock mineral composition) and reservoir characteristics (rock pore space fluid content, fluid composition, fluid pressure and rock permeability to fluid flow).

Using marine seismic signals for estimating quality factor has proven difficult because marine seismic signals are susceptible to degrading as a result of seismic energy reflection from the water surface. Such reflection can destructively interfere with detected upgoing seismic signals reflected from subsurface features of interest. The frequency spectrum of the seismic energy is typically attenuated within a band referred to as the "ghost notch." Presence of the ghost notch makes interpretation of frequency dependent attenuation difficult and inaccurate.

There continues to be a need for techniques for estimating quality factor of subsurface formations from marine seismic data.

## Summary of the Invention

A method for estimating formation quality factor according to one aspect of the invention includes determining an upgoing pressure wavefield of seismic signals recorded using a collocated pressure responsive sensor and motion responsive sensor deployed at a selected depth in a body of water. The upgoing wavefield has the spectral effect of water surface ghosting attenuated by combining the pressure responsive signals and motion responsive signals. The quality factor is determined by determining a difference in amplitude spectra between a first seismic event and a second seismic event in the upgoing pressure wavefield.

A method for seismic surveying according to another aspect of the invention includes deploying a plurality of collocated pressure responsive seismic sensors and motion responsive seismic sensors at spaced apart locations in a body of water. A seismic energy source is actuated in the body of water at selected times. Signals produced in response to seismic energy by the collocated sensors are recorded. An upgoing pressure wavefield is determined having the spectral effect of water surface ghosting attenuated by combining collocated pressure responsive signals and motion responsive signals from each of the plurality of collocated sensors. Quality factor of a formation below the bottom of the body of water is estimated by determining a difference in amplitude spectra between a first seismic event and a second seismic event in the upgoing pressure wavefield.

Other aspects and advantages of the invention will be apparent from the following description and the appended claims.

## Brief Description of the Drawings

FIG. 1 shows an example of acquiring seismic data for use with a method according to the invention.

FIG. 2 shows a flow chart of processing dual sensor data.

FIG. 3 shows an amplitude spectrum of a typical marine seismic source towed at 7 m depth, with signals recorded at normal incidence at 8 m depth, and an amplitude spectrum for signals from the same marine seismic source with the filtering effect of the receiver ghost removed.

FIG. 4 shows the effect of filtering of subsurface formations on the amplitude spectra shown in FIG. 2.

FIGS. 5A and 5B show, respectively, normalized amplitude spectra for contemporaneously acquired up-going pressure field and total pressure field signals.

## Detailed Description

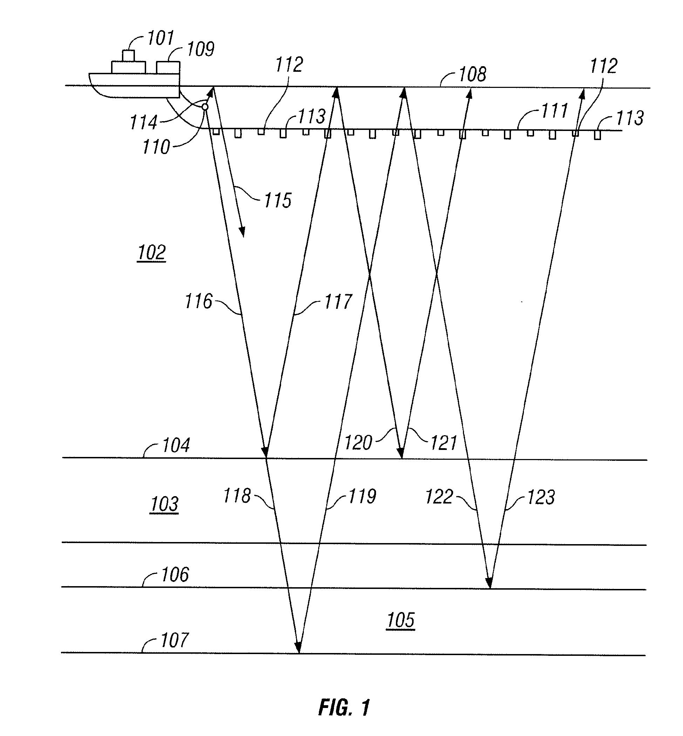

FIG. 1 shows an example of acquiring marine seismic data that can be used with methods according to the invention. A seismic vessel 101 moves along the surface 108 of a body of water 102 above a portion 103 of the subsurface that is to be surveyed. Beneath the water bottom 104, the portion 103 of the subsurface contains rock formations of interest such as a layer 105 positioned between an upper boundary 106 and lower boundary 107 thereof. The seismic vessel 101 has disposed thereon seismic acquisition control equipment, designated generally at 109. The seismic acquisition control equipment 109 includes (none shown separately) navigation control, seismic energy source control, seismic sensor control, and signal recording equipment, all of which can be of types well known in the art.

The seismic acquisition control equipment 109 causes a seismic source 110 towed in the body of water 102 by the seismic vessel 101 (or by a different vessel) to actuate at selected times. The seismic source 110 may be of any type well known in the art of seismic acquisition, including air guns or water guns, or particularly, arrays of air guns. One or more seismic streamers 111 are also towed in the body of water 102 by the seismic vessel 101 (or by a different vessel) to detect the acoustic wavefields initiated by the seismic source 110 and reflected from interfaces in the environment. Although only one seismic streamer 111 is shown in FIG. 1 for illustrative purposes, typically a plurality of laterally spaced apart seismic streamers 111 are towed behind the seismic vessel 101. The seismic streamers 111 contain sensors to detect the reflected wavefields initiated by the seismic source 110. In the present example the seismic streamers 111 contain pressure responsive sensors such as hydrophones 112, and water particle motion responsive sensors such as geophones 113. The hydrophones 112 and geophones 113 are typically co-located in pairs or pairs of sensor arrays at regular intervals along the seismic streamers 111. However, the type of sensors 112, 113 and their particular locations along the seismic streamers 111 are not intended to be limitations on the scope of the present invention. It is to be clearly understood that the pressure responsive sensor can be any type of device that generates a signal related to pressure in the water or its time gradient. Correspondingly, the motion responsive sensor can be any device that responds to motion, acceleration or velocity. Non-limiting examples of such devices include velocity sensors (geophones) and accelerometers.

Each time the seismic source 110 is actuated, an acoustic wavefield travels in spherically expanding wave fronts. The propagation of the wave fronts will be illustrated herein by ray paths which are perpendicular to the wave fronts. An upwardly traveling wavefield, designated by ray path 114, will reflect off the water-air interface at the water surface 108 and then travel downwardly, as in ray path 115, where the wavefield may be detected by the hydrophones 112 and geophones 113 in the seismic streamers 111. Such a reflection from the water surface 108, as in ray path 115 contains no useful information about the subsurface formations of interest. However, such surface reflections, also known as ghosts, act as secondary seismic sources with a time delay from initiation of the seismic source 110.

The downwardly traveling wavefield, in ray path 116, will reflect off the earth-water interface at the water bottom 104 and then travel upwardly, as in ray path 117, where the wavefield may be detected by the hydrophones 112 and geophones 113. Such a reflection at the water bottom 104, as in ray path 117, contains information about the water bottom 104. Ray path 117 is an example of a "primary" reflection, that is, a reflection originating from a boundary in the subsurface. The downwardly traveling wavefield, as in ray path 116, may transmit through the water bottom 104 as in ray path 118, reflect off a layer boundary, such as 107, of a layer, such as 105, and then travel upwardly, as in ray path 119. The upwardly traveling wavefield, ray path 119, may then be detected by the hydrophones 112 and geophones 113. Such a reflection off a layer boundary 107 contains useful information about a formation of interest 105 and is also an example of a primary reflection.

The acoustic wavefields will continue to reflect off interfaces such as the water bottom 104, water surface 108, and layer boundaries 106, 107 in combinations. For example, the upwardly traveling wavefield in ray path 117 will reflect off the water surface 108, continue traveling downwardly in ray path 120, may reflect off the water bottom 104, and continue traveling upwardly again in ray path 121, where the wavefield may be detected by the hydrophones 112 and geophones 113. Ray path 121 is an example of a multiple reflection, also called simply a "multiple", having multiple reflections from interfaces. Similarly, the upwardly traveling wavefield in ray path 119 will reflect off the water surface 108, continue traveling downwardly in ray path 122, may reflect off a layer boundary 106 and continue traveling upwardly again in ray path 123, where the wavefield may be detected by the hydrophones 112 and geophones 113. Ray path 123 is another example of a multiple reflection, also having multiple reflections in the subterranean earth.

For purposes of the present invention, the ray path of principal concern is the reflection of seismic energy from the water surface in the vicinity of the hydrophones 112 and geophones 113. Such reflection causes attenuation of certain frequencies of the seismic energy as detected by the hydrophones 112. Methods according to the invention make use of the signals detected by the geophones 113 to reduce the effects of such "ghost notch" in the hydrophone signals.

For purposes of simplifying the following explanation, the terms "hydrophone" and "geophone" will be used as shorthand descriptions for the types of signals being processed. It is to be clearly understood that the term "hydrophone" in the following description is intended to mean a signal detected by any form of pressure responsive or pressure time gradient responsive sensor. Correspondingly, "geophone" signals are interned to mean a signal detected by any form of particle motion responsive sensor, including accelerometers, velocity meters, geophones and the like.

A method according to the invention begins using the recorded hydrophone and geophone signals corresponding to each actuation of the source. The recordings should be compensated for their respective sensor and recording channels' impulse responses and the transduction constant of each type of sensor used. Each such record of hydrophone and geophone recordings corresponding to a particular actuation of the source may be referred to as a "common shot" record or common shot "gather." The signal recordings may be indexed with respect to time of actuation of the seismic source, and may be identified by the geodetic position of each seismic sensor at the time of recording. The geophone signals may be normalized with respect to the angle of incidence of the seismic wavefront detected by each geophone. See, for example, U.S. Patent No. 7,359,283 issued to Vaage et al. and assigned to an affiliate of the assignee of the present invention for a description of such normalization. The hydrophone response is substantially omni-directional and does not require correction or normalization for angle of incidence.

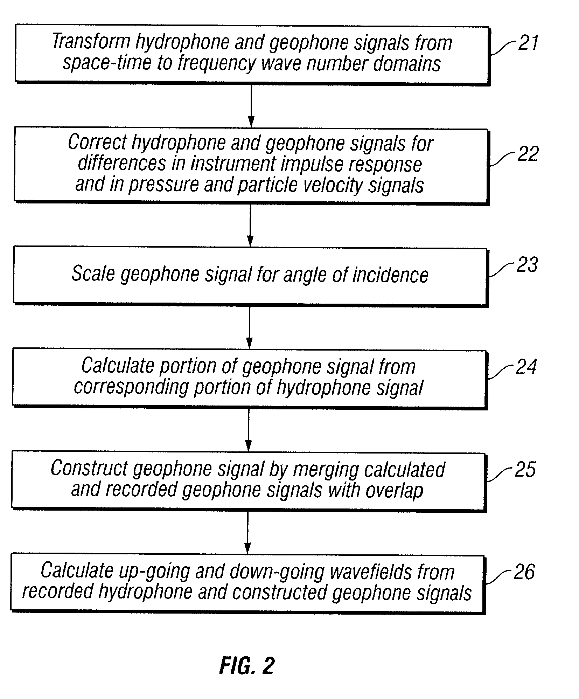

Referring to FIG. 2, a flow chart outlining an example process for using geophone and hydrophone signals may include, at 21, transforming the hydrophone and geophone signals from the space-time domain to the frequency-wavenumber ($f - k$) domain. At 22 in FIG. 2, the transformed hydrophone and geophone signals, $H_{(f, k)}$ and $G_{(f, k)}$, respectively, from the domain transform at 21 are corrected for relative differences between the sensor transfer functions, which correspond to sensor impulse responses in the time domain. Such corrections could include, for example, correcting the amplitude and phase of the hydrophone signals to match the geophone signals, correcting the geophone signals to match the hydrophone signals, or correcting both sets of signals to a common basis. Correcting for relative differences in sensor impulse responses is well known in the art. Finally, an amplitude scaling equal to the inverse of the acoustic impedance in the water may be applied to the geophone signals to correct for the relative differences in amplitudes of pressure and particle velocity. Such scaling is also well known in the art.

At 23 in FIG. 2, the corrected geophone signals from 22 are further corrected for angle of incidence. While a hydrophone records the total pressure wavefield, a vertical geophone will only record the vertical component of the particle motion wavefield. The vertical part will be equal to the total particle motion wavefield only for signals which are propagating vertically, i.e. for which the angle of incidence equals zero. For any other angle of incidence the geophone signals need to be scaled, for example, substantially as described in the Vaage et al. '283 patent.

At 24 in FIG. 2, a low frequency part of the geophone signal can be calculated or estimated from the recorded hydrophone signal. The foregoing may also be performed substantially as explained in the Vaage et al. '283 patent.

At 25 in FIG. 2, a full bandwidth geophone signal can be calculated or estimated by merging the calculated low frequency portion thereof with the measured geophone signals in an upper part of the frequency spectrum, including some overlap. The foregoing may also be performed substantially as explained in the Vaage et al. '283 patent.

At 26 in FIG. 2, a full bandwidth geophone data set and the recorded hydrophone data set are added or subtracted to calculate a full bandwidth up-going and down-going wavefield. The foregoing can be performed substantially as explained in the Vaage et al. '283 patent.

A result of combining the full bandwidth geophone signals with the hydrophone signals is an upgoing pressure wavefield that has reduced effect of the surface ghost. More specifically, the frequency filtering effect of the surface ghost is reduced. The combined geophone and hydrophone signals may be interpreted to determine two way seismic energy travel times from the water surface to seismic reflectors in the subsurface, e.g., 104, 106 and 107 in FIG. 1. Using such two way travel times, it is possible to estimate formation quality factor ("Q") for subsurface formations occurring between two two-way reflection times, $t_1$ and $t_2$. Amplitude of seismic energy as a function of frequency is related to attenuation characteristics of the subsurface formations as shown in the following expressions:

$$A_2(f) = A_1(f)\exp\left(\frac{-\pi f(t_2 - t_1)}{Q}\right);$$

$$Q = -\frac{1}{\pi f(t_2 - t_1)}\ln\left(\frac{A_2(f)}{A_1(f)}\right)$$

$$(1)$$

If both sides of the second expression for Q above are multiplied by the frequency $f$, the resulting expression is:

$$-\frac{1}{\pi(t_2 - t_1)}\ln\{\frac{A_2(f)}{A_1(f)}\} = Qf$$

$$(2)$$

The above expression is a form of equation of a straight line in the amplitude-frequency plane, that is, it has the form:

$$y = mf + b$$

in which Q is the slope of the line and the intercept, b, (at frequency of zero) is equal to zero. Therefore, to estimate the Q of the subsurface formations from seismic data between selected seismic events, e.g., reflection times $t_1$ and $t_2$, the amplitude spectra (magnitudes of the complex spectra) may be computed from two selected length data windows centered on each of the two selected seismic events (reflection times). The amplitude spectra at each time may be represented by $A_1(f)$ and $A_2(f)$. Using the amplitude spectra, the function of frequency on the left-hand side of equation (2) above may be calculated, and a straight line may be fit (such as by least squares) to the amplitude spectra function. The slope of the best-fit line is an estimate of Q for the subsurface formations disposed between seismic reflection times $t_1$ and $t_2$.

In practice however, the linear regression as described in the application never assumes the intercept b is zero. The slope (m) from which Q is derived is calculated as if there were a non-zero value of the intercept, b, although the intercept itself is never explicitly calculated The reason for considering a non-zero intercept is that amplitudes are typically not properly balanced and the spectral ratios therefore do not cancel out at zero frequency. The intercept could also be calculated and could be used to exactly calibrate the amplitude.

Using hydrophone-only streamers as is known in the art produced intercept calculations that were considered even more unreliable than calculations of the slope, which calculations themselves were considered unreliable using hydrophone-only streamers. The additional low frequency content provided by using streamers having both pressure responsive sensors and motion responsive sensors, and combining the pressure and motion signals as explained herein makes the intercept calculations substantially more reliable. Thus, using combined pressure responsive and motions responsive signals is believed to provide more accurate estimation of the slope and intercept of the amplitude spectra. The foregoing would provide not only better estimates for Q but also the opportunity to precisely calibrate seismic signal amplitude decay.

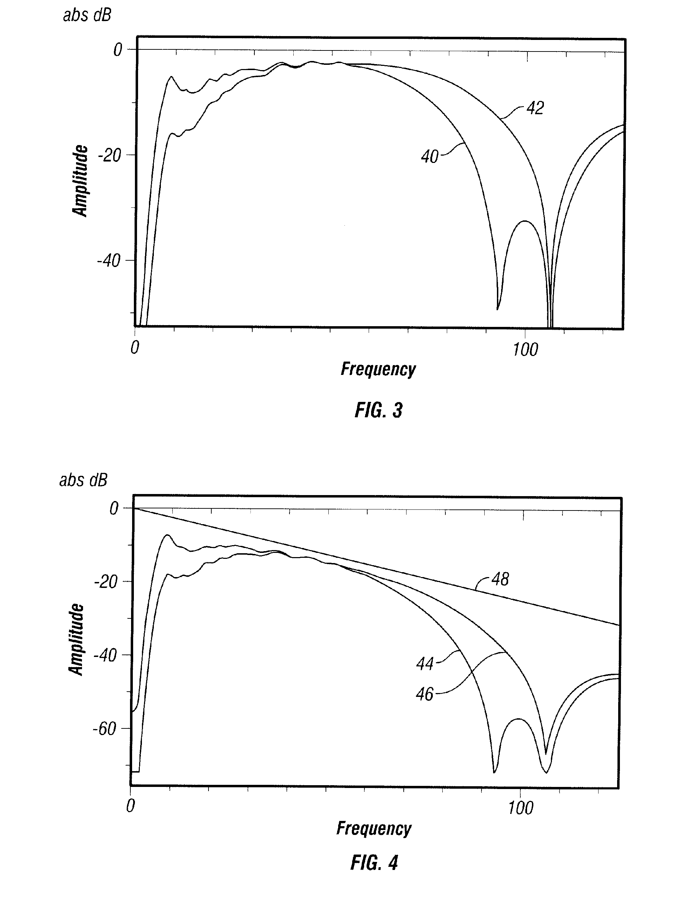

FIG. 3 shows, at curve 40, an amplitude spectrum of a typical marine seismic source towed at 7 meters depth, normal incidence, at an acquisition depth of about 8 meters. Energy at 0 Hz and about 107 Hz is suppressed due to the water surface reflection near the seismic source (the "source ghost"). The receiver ghost imposes spectral notches at 0 Hz and about 94Hz. Also shown is the amplitude spectrum, at curve 42, for seismic signals recorded from the same source, but with the filtering effect of the receiver ghost removed. The spectrum of curve 42 has been multiplied by two to facilitate comparison.

The modeled amplitude spectra shown in FIG. 3 are shown in FIG. 4 at 44 and 46, having been modified by an earth filter having response characteristics shown by line 48.

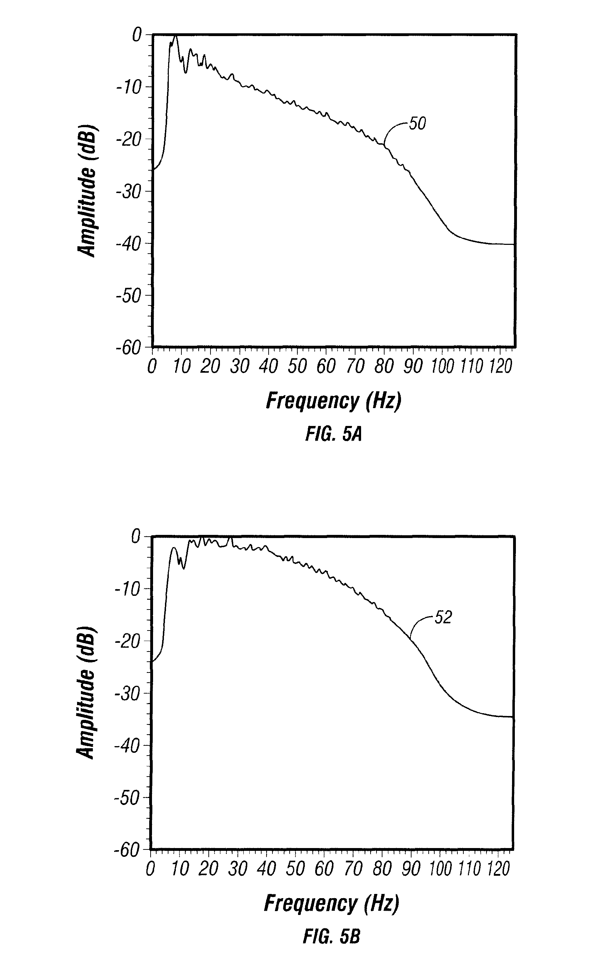

FIGS 5A and 5B show, respectively, example amplitude spectra for a contemporaneously acquired up-going pressure wavefield (50 in FIG. 5A), and total pressure wavefield (52 in FIG. 5B). The forgoing amplitude spectra are consistent with the modeling shown in FIG. 4, and demonstrate that the amplitude gradient with respect to frequency cannot easily be estimated from the total pressure field data. The receiver ghost must be removed, which can be readily performed using data from a dual sensor streamer.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for estimating formation quality factor, comprising:

   determining an upgoing pressure wavefield of seismic signals recorded using a collocated pressure responsive sensor and motion responsive sensor deployed in a body of water, the upgoing pressure wavefield having spectral effect of water surface ghosting attenuated by combining the pressure responsive signals and motion responsive signals; and
   estimating the quality factor by determining a difference in amplitude spectra between a first seismic event and a second seismic event in the upgoing pressure wavefield.

2. The method of claim 1 wherein the pressure responsive sensor comprises a hydrophone.

3. The method of claim 1 wherein the motion responsive sensor comprises a geophone.

4. The method of claim 1 wherein the amplitude spectra of the first and second seismic events are determined by sampling a selected length data window centered about each of the first and second seismic events.

5. The method of claim 1 wherein the first seismic event and the second seismic event are seismic reflectors each occurring at a different time from actuation of a seismic energy source.

6. The method of claim 1 further comprising determining a zero frequency intercept of a linear function of amplitude with respect to frequency and calibrating seismic signal amplitudes using the intercept.

7. A method for seismic surveying, comprising:

   deploying a plurality of collocated pressure responsive seismic sensors and motion responsive seismic sensors at spaced apart locations in a body of water;
   actuating a seismic energy source in the body of water at selected times;
   recording signals produced in response to seismic energy by the collocated sensors;
   determining an upgoing pressure wavefield having spectral effect of water surface ghosting attenuated by combining collocated pressure responsive signals and motion responsive signals from each of the plurality of collocated sensors; and
   estimating quality factor of a formation below the bottom of the body of water by determining a difference in amplitude spectra between a first seismic event and a second seismic event in the upgoing pressure wavefield.

8. The method of claim 7 wherein the pressure responsive sensors comprise hydrophones.

9. The method of claim 7 wherein the motion responsive sensors comprise geophones.

10. The method of claim 7 wherein the amplitude spectra of the first and second seismic events are determined by sampling a selected length data window centered about each of the first and second seismic events.

11. The method of claim 7 wherein the first seismic event and the second seismic event are seismic reflectors each occurring at a different time from actuation of a seismic energy source.

**12.** The method of claim 7 further comprising determining a zero frequency intercept of a linear function of amplitude with respect to frequency and calibrating seismic signal amplitudes using the intercept.

**FIG. 1**

| Transform hydrophone and geophone signals from space-time to frequency wave number domains | 21 |

| Correct hydrophone and geophone signals for differences in instrument impulse response and in pressure and particle velocity signals | 22 |

| Scale geophone signal for angle of incidence | 23 |

| Calculate portion of geophone signal from corresponding portion of hydrophone signal | 24 |

| Construct geophone signal by merging calculated and recorded geophone signals with overlap | 25 |

| Calculate up-going and down-going wavefields from recorded hydrophone and constructed geophone signals | 26 |

**FIG. 2**

abs dB

**FIG. 3**

abs dB

**FIG. 4**

FIG. 5A

FIG. 5B

Europäisches
Patentamt
European
Patent Office
Office européen
des brevets

# EUROPEAN SEARCH REPORT

**Application Number**

EP 09 17 3513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/050611 A1 (BORRESEN CLAES N [US] BORRESEN CLAES NICOLAI [US]) 9 March 2006 (2006-03-09) * paragraphs [0005], [0012] - [0015] * * paragraphs [0039] - [0045]; claims 1,8,9; figure 3 * | 1-12 | INV. G01V1/30 G01V1/36 G01V1/38 |
| Y | QUINQUIS A ET AL: "FM pulses separation for improving sub-bottom attenuation estimation" OCEANS '97. MTS/IEEE CONFERENCE PROCEEDINGS HALIFAX, NS, CANADA 6-9 OCT. 1997, NEW YORK, NY, USA,IEEE, US, vol. 2, 6 October 1997 (1997-10-06), pages 1359-1364, XP010246177 ISBN: 978-0-7803-4108-1 * the whole document * | 1-12 | |
| A | US 2006/265132 A1 (RICKETT JAMES E [US]) 23 November 2006 (2006-11-23) * paragraphs [0023] - [0039] * * paragraphs [0048] - [0057]; claim 1; figures 2-3 * | 1,7 | TECHNICAL FIELDS SEARCHED (IPC) G01V |
| A | LIU Y; TENG T -L; BEN-ZION Y: "Near-surface seismic anisotropy, attenuation and dispersion in the aftershock region of the 1999 Chi-Chi earthquake" GEOPHYSICAL JOURNAL INTERNATIONAL, vol. 160, no. 2, February 2005 (2005-02), pages 695-706, XP002572022 ISSN: 0956-540X * page 696 - page 701 * | 1,7 | |

The present search report has been drawn up for all claims

| Place of search | Date of completion of the search | Examiner |
|---|---|---|
| Munich | 9 March 2010 | Trique, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3513

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2010

| Patent document cited in search report | | Publication date | Patent family member(s) | | Publication date |
|---|---|---|---|---|---|
| US 2006050611 | A1 | 09-03-2006 | AU<br>BR<br>CA<br>CN<br>GB<br>WO | 2005282945 A1<br>PI0514989 A<br>2575274 A1<br>101014881 A<br>2430748 A<br>2006028702 A1 | 16-03-2006<br>01-07-2008<br>16-03-2006<br>08-08-2007<br>04-04-2007<br>16-03-2006 |
| US 2006265132 | A1 | 23-11-2006 | NONE | | |

EPO FORM P0459

For more details about this annex : see Official Journal of the European Patent Office, No. 12/82

**EP 2 184 621 A1**

REFERENCES CITED IN THE DESCRIPTION

**Patent documents cited in the description**

- US 7239577 B, Tenghamn

- US 7359283 B, Vaage